# EUROPEAN PATENT SPECIFICATION

(11) **EP 3 846 384 B1**
(45) Date of publication and mention of the grant of the patent: **09.04.2025**
(21) Application number: 19855466.9
(22) Date of filing: 29.08.2019
(51) Int. Cl.: H04L 12/40

(54) **METHOD AND APPARATUS FOR TRANSMITTING SERVICE**
VERFAHREN UND VORRICHTUNG ZUR DIENSTÜBERTRAGUNG
PROCÉDÉ ET APPAREIL POUR LA TRANSMISSION D'UN SERVICE

(30) Priority: 31.08.2018 CN 201811010752
(43) Date of publication of application: 07.07.2021
(73) Proprietor: ZTE Corporation, Shenzhen, Guangdong 518057 (CN)
(72) Inventor: ZHU, Aihua, Shenzhen, Guangdong 518057 (CN)
(74) Representative: Baudler, Ron
(86) International application number: PCT/CN2019/103276
(87) International publication number: WO 2020/043161

(56) References cited:
- EP-A1- 2 590 372
- CN-A- 1 984 039
- CN-A- 106 612 220
- CN-A- 107 395 425
- CN-A- 108 156 074
- US-A1- 2018 013 511
- US-A1- 2018 102 834
- US-B1- 10 063 336

## Description

### Field of the Invention

The embodiments of the present disclosure relate to, but are not limited to, the technical field of communications, in particular to a method and apparatus for transmitting a service.

### Background of the Invention

Flex Ethernet (FlexE) is an interface technology for a carrier network to implement service isolation carrying and network fragmentation. Research on the FlexE technology was initiated by the Optical Internet Forum (OIF) of the International Organization for Standardization in March 2015, and relevant technical documents were formally adopted by voted in March 2016.

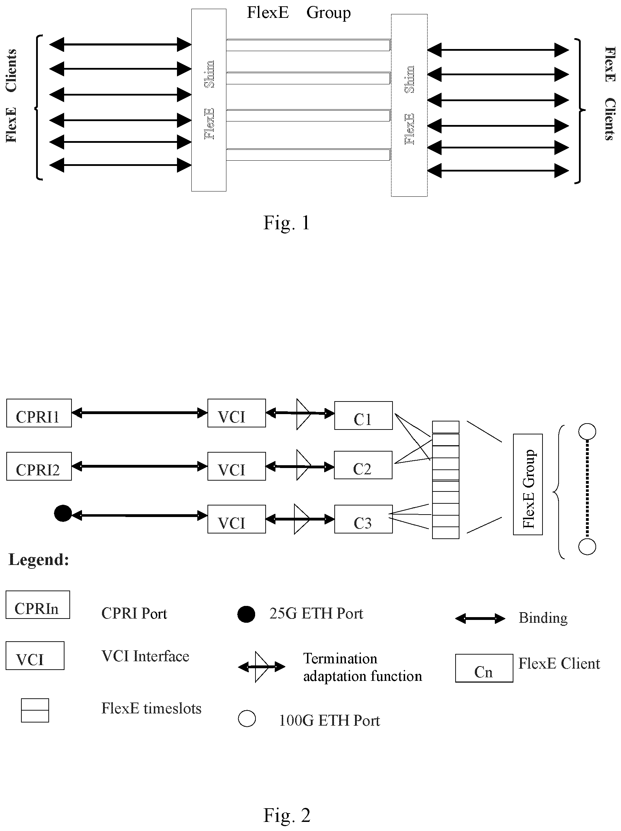

According to the standard agreements of the OIF organization, a basic structure of FlexE is shown in Fig. 1, in which the following three parts are mainly included: a FlexE Client, a FlexE Group, and a FlexE Shim.

The FlexE Client is a client-side service of FlexE, which is an Ethernet stream based on a media access control (MAC) data rate that may or may not correspond to any Ethernet physical layer (PHY) rate.

The FlexE Group reuses 100G chips, and is a group of multiple 100GEs binding together. The FlexE Group consists of one or more bound Ethernet PHYs.

The FlexE Shim is multiplexing and demultiplexing portions from the FlexE Client to the FlexE Group, and is a layer of the FlexE Client that is run through the FlexE Group by mapping or de-mapping.

US10063336B1 describes a protected trans ponded service includes a plurality of ports; switch interface circuitry communicatively coupled to a switch module; and interface circuitry communicatively coupled to the plurality of ports and the switch interface circuitry, wherein the interface circuitry includes a cross-point switch between the plurality of ports and the switch interface circuitry; wherein bandwidth of the plurality of ports is greater than bandwidth of the switch interface circuitry to the switch module; and wherein the protected trans ponded service is configured between the plurality of ports directly via the interface circuitry and is selectively routed to the switch module via the switch interface circuitry for restoration thereof, responsive to a failure.

At present, if a U-side port (i.e., an Ethernet physical port bound to the FlexE Client) fails, the FlexE Client cannot be switched to another port. Under this situation, the service would be interrupted.

### Summary of the Invention

In an embodiment of the present disclosure, provided is a method and apparatus for transmitting a service, which can switch, when a physical port fails, the service to other physical ports, thereby improving the stability of service transmission.

This is achieved by the features of claims 1 to 8.

An embodiment of the present disclosure provides a method for transmitting a service, including: switching, when a first physical port for transmitting the service fails, the service to a second physical port or a third physical port in which no service is transmitted for being transmitted, the second physical port being a physical port that is bound to a first FlexE Client and other than the first physical port, and the first FlexE Client being a FlexE Client that the service corresponds to, and the third physical port is a physical port that is bound to a second FlexE Client differing from the first FlexE Client.

In one alternative embodiment of the present disclosure, switching, when a first physical port for transmitting the service fails, the service to a second physical port or a third physical port in which no service is transmitted for being transmitted includes: switching, when there is the second physical port in which no service is transmitted and the second physical port in which no service is transmitted is normal, the service to the second physical port in which no service is transmitted.

In one alternative embodiment of the present disclosure, the method further includes: switching, when there is the second physical port in which no service is transmitted but the second physical port in which no service is transmitted is abnormal or when there is no the second physical port in which no service is transmitted, the service to the third physical port in which no service is transmitted, a priority of which is lower than that of the first physical port.

In one alternative embodiment of the present disclosure, the second physical port has a priority different from that of the first physical port.

In one alternative embodiment of the present disclosure, before switching, when a first physical port for transmitting the service fails, the service to a second physical port or a third physical port in which no service is transmitted for being transmitted, the method further includes: creating a virtual universal public radio interface, VCI; binding at least one physical port to at least one said VCI interface, and binding the at least one said VCI interface to one said FlexE Client; enabling or disabling a physical port in terms of a priority of the physical port; and transmitting the service at the first physical port, the first physical port being in an enabled state.

In one alternative embodiment of the present disclosure, binding at least one physical port to at least one said VCI port includes any one of the following: binding one said physical port to one said VCI interface; binding N said physical ports to one said VCI interface; and binding N said physical ports to N said VCI interfaces, and binding the at least one said VCI interface to one said FlexE Client includes any one of the following: binding N said VCI interfaces to one said FlexE Client; and binding one said VCI interface to one said FlexE Client, N being an integer greater than or equal to 1.

In one alternative embodiment of the present disclosure, enabling or disabling the physical port includes at least one of the following: when priorities of physical ports bound to one same FlexE Client are not equivalent with each other, enabling one of the physical ports and disabling the other physical ports; when the priorities of the physical ports bound to the same FlexE Client are all equivalent, enabling all the physical ports bound to the FlexE Client; when the priorities of the physical ports bound to the same FlexE Client are not equivalent with each other and the priorities of the physical ports bound to the same FlexE Client are not set as a preset value, enabling one of the physical ports and disabling the other physical ports; when the priorities of the physical ports bound to the same FlexE Client are all equivalent and the priorities of the physical ports bound to the same FlexE Client are not set as the preset value, enabling all the physical ports bound to the FlexE Client; when the priorities of the physical ports bound to the same FlexE Client are partly equivalent while partly not, enabling at least one of the physical ports and disabling the other physical ports; and when the priorities of the physical ports bound to the same FlexE Client are partly equivalent while partly not and the priorities of the physical ports bound to the same FlexE Client are not set as the preset value, enabling at least one of the physical ports and disabling the other physical ports.

In one alternative embodiment of the present disclosure, provided is an apparatus for transmitting a service, including: a switching module, configured to switch, when a first physical port for transmitting the service fails, the service to a second physical port or a third physical port in which no service is transmitted for being transmitted. The second physical port is a physical port that is bound to a first FlexE Client and other than the first physical port, and the first FlexE Client is a FlexE Client that the service corresponds to, and the third physical port is a physical port that is bound to a second FlexE Client differing from the first FlexE Client.

One embodiment of the present disclosure provides a device for transmitting a service, which includes a processor and a computer-readable storage medium. The computer-readable storage medium stores instructions which, when are executed by the processor, causes any of the foregoing methods for transmitting a service to be implemented.

One embodiment of the present disclosure provides a computer-readable storage medium on which a computer program is stored, the computer program, when is executed by a processor, causes the steps of anyone of the above-mentioned methods for transmitting a service to be implemented.

### Brief Description of the Drawings

The drawings described herein are provided for a further understanding of the embodiments of the present disclosure and constitute a part of the description. The drawings described herein intents to explain the technical solutions of the embodiments together with embodiments of the present disclosure, and do not constitute an improper limitation to the technical solutions of the embodiments the present disclosure.
Fig. 1 is a schematic diagram of a basic structure of FlexE in the related technology;
Fig. 2 is a schematic diagram of a port binding in the related technology;
Fig. 3 is a flowchart of a method for transmitting a service according to an embodiment of the present disclosure;
Fig. 4 (a) is a schematic diagram of binding N VCI interfaces to one FlexE Client according to an embodiment of the present disclosure;
Fig. 4(b) is a schematic diagram of binding N physical ports to one VCI interface according to an embodiment of the present disclosure;
Fig. 4(c) is a schematic diagram of binding N physical ports to N VCI interfaces according to an embodiment of the present disclosure;
Fig. 5 is a schematic diagram of the structural composition of an apparatus for transmitting a service according to another embodiment of the present disclosure;
Fig. 6 (a) is a schematic diagram of service transmission when N VCI interfaces are bound to one FlexE Client according to an embodiment of the present disclosure;
Fig. 6(b) is a schematic diagram of service transmission when N physical ports are bound to one VCI interface according to an embodiment of the present disclosure; and
Fig. 6(c) is a schematic diagram of service transmission when N physical ports are bound to N VCI interfaces according to an embodiment of the present disclosure.

### Detailed Description of the Embodiments

The present disclosure will be explained in detail with reference to the accompanying drawings and the embodiments. It should be noted that, as long as there is no conflict, the embodiments of the present disclosure and the features in the embodiments can be combined with each other in an intended manner.

Other features and advantages of the embodiments of the present disclosure will be described in the following of the description, and would partially become obvious from the description or be understood by implementing the embodiments of the present disclosure. The objectives and other advantages of the embodiments of the present disclosure can be realized and obtained through the structures specifically pointed out in the description, claims and drawings.

Steps illustrated in the flowchart of the accompanying drawings may be executed in a computer system, such as in accordance with a set of computer executable instructions. Further, although a logical order is shown in the flowchart, in some cases, the steps shown or described may be executed in a different order from the ones defined herein.

In a current related implementation method, a virtual common public radio Internet (CPRI) interface (VCI, virtual CPRI interface) is bound with an Ethernet physical port in 1: 1 manner, and the VCI port is bound to a FlexE Client in a one-to-one manner, as shown in Fig. 2. In this way, isolation between a service and ports is well realized. However, if the U-side port (i.e., the Ethernet physical port) failed, the FlexE Client cannot be switched to other ports. As a result, the service is interrupted.

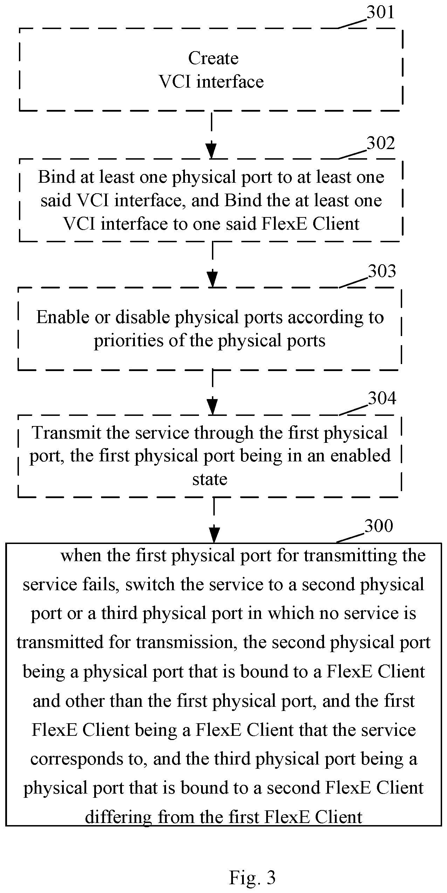

Referring to Fig. 3, an embodiment of the present disclosure provides a method for transmitting a service including the following steps.

In step 300, when a first physical port (i.e., a CPRI port) for transmitting a service fails, the service is switched to a second physical port or a third physical port in which no service is transmitted so as to be transmitted.

In this case, the second physical port is a physical port that is bound to a first FlexE Client and other than the first physical port, the first FlexE Client being a FlexE Client that the service corresponds to. The third physical port is a physical port that is bound to a second FlexE Client differing from the first FlexE Client.

In the embodiment of the present disclosure, the second physical port has a priority different from that of the first physical port.

In the embodiment of the present disclosure, when there is a second physical port in which no service is transmitted and it works normally, the service is switched to the second physical port in which no service is transmitted.

When there is a second physical port in which no service is transmitted but it works abnormally, or when there is no such second physical port in which no service is transmitted, the service is switched to a third physical port in which no service is transmitted and a priority thereof is lower than that of the first physical port.

In the embodiment of the present disclosure, when at least two physical ports fail, the second physical port or the third physical port is switched to in terms of an order of priorities of the physical ports, such as from high to low or from low to high.

In another embodiment of the present disclosure, when failure of the first physical port is recovered, the service is switched back to the first physical port for transmission.

In the embodiment of the present disclosure, a simple and lightweight protocol called Inter-class Control Protocol (ICCP) and running between Transmission Control Protocol (TCP)/ Internet Protocol (IP) may be adopt to implement switching or handover among physical ports, which will be not descried in details herein.

In another embodiment of the present disclosure, before the step that the service is switched to a second physical port or a third physical port in which no service is transmitted so as to be transmitted, the method further includes the following steps.

In step 301, a VCI interface is created.

In step 302, at least one physical port is bond to at least one said VCI interface, and the at least one VCI interface is bond to one said FlexE Client.

At least one physical port being bond to at least one said VCI interface includes any of the following:
binding one said physical port to one said VCI interface;
binding N said physical ports to one said VCI interface; and
binding N said physical ports to N said VCI interfaces.

At least one VCI interface being bond to one said FlexE Client includes any one of the following:
binding N said VCI interfaces to one said FlexE Client; and
binding one said VCI interface to one said FlexE Client,
N is an integer greater than or equal to 1.

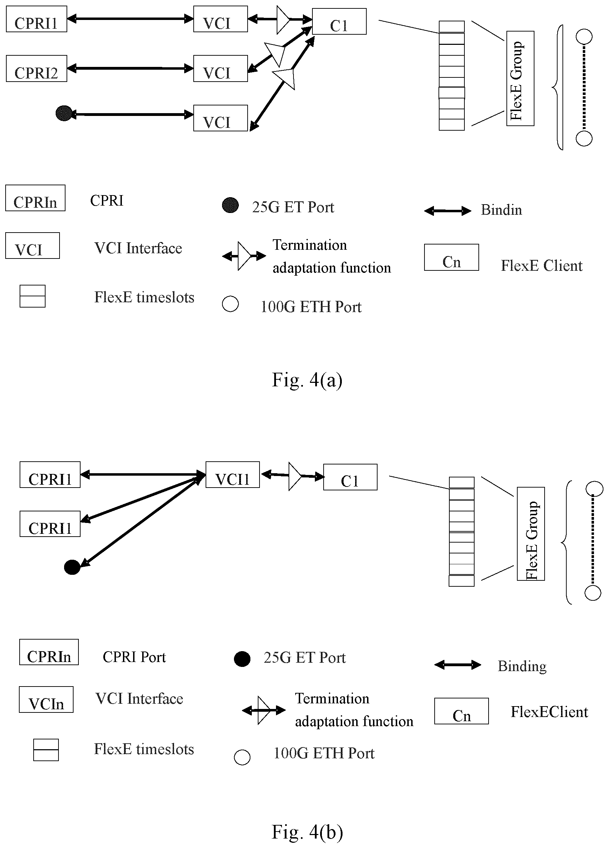

For example, in the step 302, one said physical port may be bond to one said VCI interface, and N said VCI interfaces may be bond to one said FlexE Client, as shown in Fig. 4(a).

For another example, in the step 302, N said physical ports may be bond to one said VCI interface, and the one said VCI interface may be bond to one said FlexE Client, as shown in Fig. 4(b).

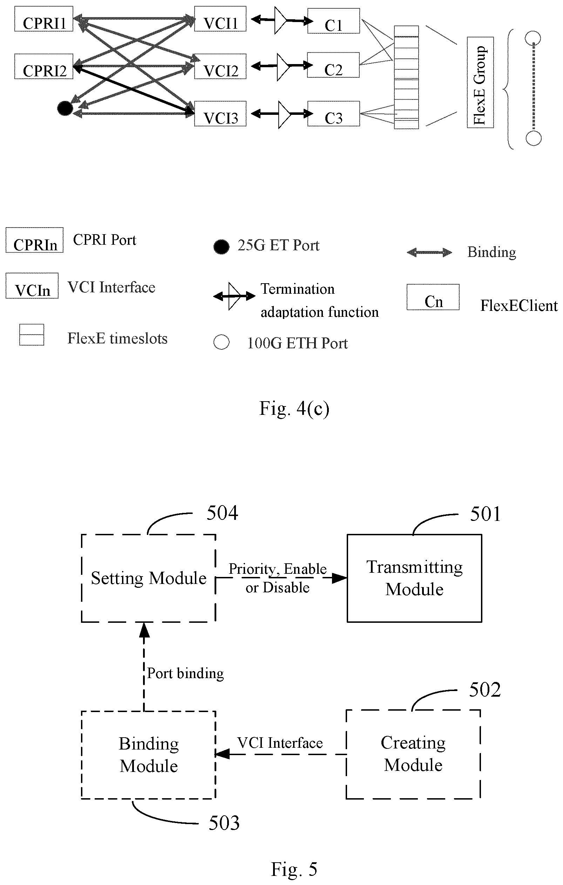

For yet another example, N said physical ports may be bond to N said VCI interfaces, and one said VCI interface may be bond to one said FlexE Client, as shown in Fig. 4(c), in which each physical port is bond to N VCI interfaces and each VCI interface is bound to N physical ports.

In these cases, N is an integer greater than or equal to 1.

Of course, binding modes between the physical port and the VCI interface is not limited to the above three cases, and other binding modes also fall into the protection scope of the embodiment of the present disclosure, which will not be described further herein.

It should be noted that the physical ports bound to the same VCI interface may be physical ports of the same type, or of different types; and the physical ports bound to different VCI ports may be physical ports of the same type of, or of different types.

Similarly, the VCI interfaces bound to the same FlexE Client may be VCI interfaces of the same type, or of different types; and the VCI interfaces bound to different FlexE Clients may be VCI interfaces of the same type, or of different types.

Before the step that the service is switched to a second physical port or a third physical port in which no service is transmitted so as to be transmitted, the method further includes the following steps.

In step 303, the physical ports are enabled or disabled according to the priorities of these physical ports.

In the embodiment of the present disclosure, an initial priority of a physical port may be set as a preset value (for example, 0), indicating that this priority is not a valid priority. Comparison among priorities can be performed only if the priorities are not set as the preset value.

After the initial priorities of the physical ports have been set, it is further allowed to manually modify a priority. If a priority of a physical port is being modified, the physical port whose priority is being modified is not considered to be used when switching of the physical ports is performed. That is, the second physical port is a physical port that is bonded to the second FlexE Client but other than the first physical port or is a physical port being modified its priority, and the third physical port is a physical port that is bound to the second FlexE Client but other than the one being modified its priority.

In the embodiment of the present disclosure, the step that the physical ports are enabled or disabled includes at least one of the following cases.

When priorities of the physical ports bound to the same FlexE Client are not equivalent with each other, one of the physical ports is enable and the others are disable. Specifically, a physical port with the highest priority may be enabled. If the physical port with the highest priority among those physical ports bound to the same FlexE Client is bound to at least one other FlexE Client at the same time and this physical port with the highest priority has been enabled, then a physical port having the secondary highest priority besides the physical port with the highest priority is enabled. Alternatively, a physical port with the lowest priority may be enabled. If the physical port with the lowest priority among those physical ports bound to the same FlexE Client is bound to at least one other FlexE Client at the same time and this physical port with the lowest priority has been enabled, then a physical port having the secondary lowest priority besides the physical port with the lowest priority is enabled;

When priorities of the physical ports bound to the same FlexE Client are all equivalent, all the physical ports bound to the FlexE Client are enabled;

When priorities of the physical ports bound to the same FlexE Client are not equivalent with each other and the priorities of the physical ports bound to the same FlexE Client are not set as the preset value (for example, 0), one of the physical ports is enabled, and the other physical ports are disabled;

When priorities of the physical ports bound to the same FlexE Client are all equivalent and the priorities of the physical ports bound to the same FlexE Client are not set as the preset value (for example, 0), all the physical ports bound to the FlexE Client are enabled;

When priorities of the physical ports bound to the same FlexE Client are partly equivalent while partly not, at least one of the physical ports is enabled, and the other physical ports are disabled. Specifically, a physical port or physical ports with the highest priority may be enabled. If the physical port(s) with the highest priority (which may be one or more physical ports with the same priority) among the physical ports bound to the same FlexE Client is bound to at least one other FlexE Client at the same time and this physical port(s) with the highest priority has/have been enabled, then a physical port or physical ports having the secondary highest priority besides the physical port(s) with the highest priority is/are enabled. Alternatively, a physical port or physical ports with the lowest priority may be enabled. If the physical port(s) with the lowest priority among the physical ports bound to the same FlexE Client is bound to at least one other FlexE Client at the same time and this physical port(s) with the lowest priority has/have been enabled, then a physical port or physical ports having the secondary lowest priority besides the physical port(s) with the lowest priority is/are enabled; and

When priorities of the physical ports bound to the same FlexE Client are partly equivalent while partly not and the priorities of the physical ports bound to the same FlexE Client are not set as the preset value, at least one of the physical ports is enabled, and the other physical ports are disabled.

In the embodiment of the present disclosure, the physical port in an enabled state can be used for transmission service, while the physical port in a disabled state cannot.

Before the step that the service is switched to a second physical port or a third physical port in which no service is transmitted so as to be transmitted, the method further includes the following steps.

In step 304, the service is transmitted through the first physical port, the first physical port being in the enabled state.

In the embodiment of the present disclosure, when the physical ports bound to the same FlexE Client are all in the enabled state, an aggregation service may be transmitted through the physical ports bound to the same FlexE Client.

Referring to Fig. 5, another embodiment of the present disclosure provides an apparatus for transmitting a service, which includes a transmission module 501.

The transmission module 501 is configured to switch a service to a second physical port or a third physical port in which no service is transmitted for transmission when a first physical port used to transmit the service fails.

In this case, the second physical port is a physical port which is bound to a first FlexE Client and other than the first physical port, the first FlexE Client being a FlexE Client that the service corresponds to. The third physical port is a physical port bound to a second FlexE Client that differs from the first FlexE Client.

In the embodiment of the present disclosure, the transmission module 501 is specifically configured to:
switch, when the first physical port used to transmit a service fails, the service to a second physical port in which no service is transmitted if there is the second physical port in which no service is transmitted and it works normally.

In the embodiment of the present disclosure, the transmission module 501 is further configured to:
switch, when there is the second physical port in which no service is transmitted but it works abnormally, or when there is no such second physical port in which no service is transmitted, the service to a third physical port in which a priority is lower than that of the first physical port and no service is transmitted.

In the embodiment of the present disclosure, the second physical port has a priority different from that of the first physical port.

In the embodiment of the present disclosure, the apparatus for transmitting a service further includes:
a creation module 502, configured to create a VCI interface;
a binding module 503, configured to bind at least one physical port to at least one said VCI interface, and bind at least one said VCI interface to one said FlexE Client; and
a setting module 504, configured to enable or disable the physical port in terms of the priority of the physical port.

The transmission module 501 is further configured to transmit the service through the first physical port, the first physical port being in an enabled state.

In the embodiment of the present disclosure, the binding module 503 is specifically configured to bind at least one physical port to at least one VCI interface using anyone of the following mode implementations:
binding one said physical port to one said VCI interface;
binding N said physical ports to one said VCI interface; and
binding N said physical ports to N said VCI interfaces.

The binding module 503 is specifically configured to bind at least one VCI interface to one FlexE Client using anyone of the following mode implementations:
binding N said VCI interfaces to one said FlexE Client; and
bind one said VCI interface to one said FlexE Client,
N is an integer greater than or equal to 1.

In the embodiment of the present disclosure, the setting module 504 is specifically configured to implement enabling or disabling of the physical port using at least one of the following approaches.

When priorities of the physical ports bound to the same FlexE Client are not equivalent with each other, one of the physical ports is enable and the others are disable;

When priorities of the physical ports bound to the same FlexE Client are all equivalent, all the physical ports bound to the FlexE Client are enabled;

When priorities of the physical ports bound to the same FlexE Client are not equivalent with each other and the priorities of the physical ports bound to the same FlexE Client are not set as a preset value, one of the physical ports is enabled, and the other physical ports are disabled;

When priorities of the physical ports bound to the same FlexE Client are all equivalent and the priorities of the physical ports bound to the same FlexE Client are not set as a preset value, all the physical ports bound to the FlexE Client are enabled;

When priorities of the physical ports bound to the same FlexE Client are partly equivalent while partly not, at least one of the physical ports is enabled, and the other physical ports are disabled; and
When priorities of the physical ports bound to the same FlexE Client are partly equivalent while partly not and the priorities of the physical ports bound to the same FlexE Client are not set as a preset value, at least one of the physical ports is enabled, and the other physical ports are disabled.

Another embodiment of the present disclosure provides a device for transmitting a service, including a processor and a computer-readable storage medium. The computer-readable storage medium stores instructions which, when are executed by the processor, implements anyone of the above methods for transmitting a service.

Another embodiment of the present disclosure provides a computer-readable storage medium on which a computer program is stored. The computer program, when is executed by a processor, implements the steps of anyone of the foregoing methods for transmitting a service.

The embodiments of the present disclosure include: when a first physical port for tr ansmitting a service fails, the service is switched to a second physical port or a third phy sical port in which no service is transmitted for being transmitted, the second physical p ort being a physical port that is bound to a first FlexE Client and other than the first phys ical port, and the first FlexE Client being a FlexE Client that the service corresponds to, and the third physical port is a physical port that is bound to a second FlexE Client differ ing from the first FlexE Client. The embodiments of the present disclosure realize switc hing, when a physical port fails, the service to other physical ports, thereby improving th e stability of service transmission.

In alternative embodiments, when there is the second physical port in which no service i s transmitted and the second physical port in which no service is transmitted works nor mally, the service is switched to the second physical port in which no service is transmitt ed. In the embodiments of the present disclosure, the service is first switched to another physical port in which no service is transmitted and which is bond to the FlexE Client co rresponding to the service such that switching of the service to other physical ports can be implemented without affecting transmission of other services.

The computer storage media includes but is not limited to a RAM, a ROM, an EEPROM, a flash memory or other storage technologies, a CD-ROM, a digital versatile disk (DVD) or other optical disk storage, a magnetic cassette, a tape, a magnetic disk storage or other magnetic storage devices, or any other medium that is used to store desired information and t can be accessed by a computer.

The implementation of the method according to the embodiments of the present disclosure will be described below through specific examples.

### Example One

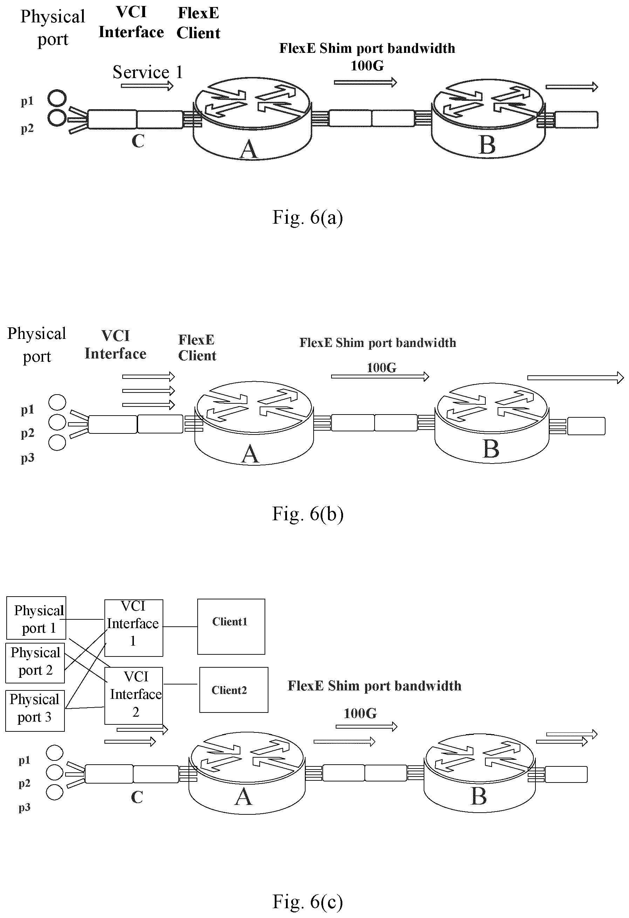

As shown in Fig. 6(a), it is an application scenario where two routers are connected through a FlexE. It is supposed that a 25G Ethernet Common Public Radio Interface (ECPRI) service is to be transmitted from a router A to a router B, the rate of each Ethernet PHY being of 100G. In this case, steps regarding binding multiple ports to a FlexE Client and switching in the case of a failure are as follows.

In step 1, one VCI interface and one FlexE Client are created at both a device A and a device B, the VCI interface is bound to an Ethernet physical port p1 and an Ethernet physical port p2 at the same time, a priority of the physical port p1 being set as 1 and a priority of the physical port p2 being set as 2, and the VCI interface is bound to the FlexE Client.

In this step, the higher a value of the priority of the physical port is, the lower the priority is (except 0). A default value of the priority is 0. The priority is 0 if it does not undergo an initially configuration. A default order for the ports is used, e.g., p1 and p2 are ordered by name, and p1 has a higher priority as p1 locates in front.

In step 2, the physical port with a higher priority is enabled, that is, p1 is enabled. When there is no initially configuration, the highest priority is selected to be enabled according to the default order of the ports (referring to the step 1). When the priorities are inconsistent, one port is enabled and the other ports are disabled automatically; when the priorities are identical, one port is enabled and other ports are enabled too.

In step 3, timeslots are allocated, and identical timeslots are configured for services of the multiple physical ports. Here, as a result, 5 timeslots are allocated to the FlexE client of the 25G ECPRI service.

In step 4, if a failure occurs at a point C, a channel detects that a corresponding client-side signal fails, and generates an alarm and sends the alarm to the device A. After the device A receives the alarm, the device A runs a specific protocol and then switches the service from the physical port p1 to the physical port p2. Then, the service is transmitted normally.

In this step, an ICCP (Internet Content Common Protocol) protocol may be used to detect the client-side signal.

In step 5, if the failure of the point C recovers, the corresponding client-side signal is detected to be valid, the alarm generated by the device A disappears, and the service is switched from the physical port p2 back to the physical port p1 after the specific protocol has been run. The service is transmitted as normal.

### Example two

As shown in Fig. 6(b), it is an application scenario where two routers are connected through a FlexE. It is supposed that three 25G ECPRI services are to be transmitted from a router A to a router B, the rate of each Ethernet physical layer (PHY) being of 100G. In this case, steps regarding aggregation of three services at a FlexE Client are as follows.

In step 1, three VCI interfaces and one FlexE Client are created at both a device A and a device B, each of the VCI interfaces is bound to an Ethernet physical port. Priorities of a physical port p1, a physical port p2 and a physical port p3 each are set as 1, and the three VCI interfaces each are bound to the FlexE Client.

In step 2, the physical ports under the FlexE Client are all enabled as the priorities of the physical ports are identical, that is, the physical port p1, the physical port p2 and the physical port p3 are all enabled.

In step 3, timeslots are allocated, and services of the multiple physical ports are configured with total timeslots, i.e., 15 timeslots being allocated to the FlexE client which is aggregated with three 25G ECPRI services, and a corresponding FlexE Group, a FlexE Phy and a FlexE Shim are created.

In this step, the three 25G ECPRI services are aggregated at the FlexE client.

In step 4, after the creation is completed, the three services are transmitted independently and simultaneously, and the services are all carried normally.

### Example Three

As shown in Fig. 6(c), it is an application scenario where two routers are connected through a FlexE. It is supposed that One 25G ECPRI service and one 10G CPRI service are to be transmitted from a router A to a router B, the rate of each Ethernet PHY is of 100G. In this case, steps regarding binding multiple ports to FlexE Clients and switching in the case of a failure are as follows.

In step 1, two VCI interfaces and two FlexE Clients are created at both a device A and a device B, a VCI interface 1 is bond to both a physical port p1 and a physical port p2 and a VCI interface 2 is bond to both the physical port p1 and the physical port p2, a global priority of the physical port p1 being set as 1 and a global priority of the physical port p2 being set as 2, and the VCI interface 1 is bound to a FlexE Client 1, and the VCI interface 2 is bound to a FlexE Client 2.

In step 2, the physical port with the higher priority is automatically enabled, that is, the physical port p1 1 is enabled for the VCI interface 1, the physical port p2 is enabled for the VCI interface 2, and other physical ports are disabled by default.

In step 3, timeslots are allocated, and identical timeslots are configured for services of the multiple physical ports, i.e., the FlexE Client 1 and the FlexE Client 2 each being allocated with 5 timeslots, and corresponding FlexE Groups, FlexE Phys and FlexE Shims are created.

In step 4, if a failure occurs at a point C, after failure of a corresponding client-side signal is detected, the device A generates an alarm and automatically queries a corresponding relationship between the physical ports and respective FlexE Clients. Although the physical port p2 has carried the FlexE Client 2, the physical port p1 has the higher priority than the physical port p2 and the service carried by the physical port p1 is more important. As such, the service is switched to the physical port p2.

The above three examples are three specific implementations of the embodiments of the present disclosure. For binding of different rates and different types of ports to the same FlexE client, there may be various specific implementations (such as binding of a port having 100G, 400G rate, and binding to both a VEI interface and a VCI interface), but they all fall into the protection scope of the present disclosure.

Although the implementation manners disclosed in the embodiments of the present disclosure are as described above, the contents described are only those used to facilitate well understanding of the embodiments of the present disclosure, and are not intended to limit thereto. The protection scope of the embodiments of the present disclosure shall still be subject to the scope defined by the appended claims.

## Claims

1. A method of transmitting a service, **characterized in that** the method comprises:
switching (300), when a first physical port for transmitting the service fails, the service to a second physical port in which no service is transmitted, wherein the second physical port is a physical port that is bound to a first Flex Ethernet, FlexE, Client and other than the first physical port, and the first FlexE Client is a FlexE Client that the service corresponds to; or
switching (300), when a first physical port for transmitting the service fails, the service to a third physical port in which no service is transmitted, wherein the third physical port is a physical port that is bound to a second FlexE Client differing from the first FlexE Client,
wherein switching, when a first physical port for transmitting the service fails, the service to a second physical port or a third physical port in which no service is transmitted for being transmitted comprises:
switching, when there is the second physical port in which no service is transmitted and the second physical port in which no service is transmitted is normal, the service to the second physical port in which no service is transmitted,
the method further comprises:
switching, when there is the second physical port in which no service is transmitted but the second physical port in which no service is transmitted is abnormal or when there is no the second physical port in which no service is transmitted, the service to the third physical port in which no service is transmitted, a priority of which is lower than that of the first physical port.

2. The method according to claim 1, **characterized in that**, the second physical port has a priority different from that of the first physical port.

3. The method according to any one of claims 1 to 2, **characterized in that**, before switching, when a first physical port for transmitting the service fails, the service to a second physical port or a third physical port in which no service is transmitted, the method further comprises:
creating a virtual universal public radio interface, VCI;
binding at least one physical port to at least one said VCI interface, and binding the at least one said VCI interface to one said FlexE Client; and
transmitting the service at the first physical port, wherein the first physical port is in an enabled state.

4. The method according to claim 3, **characterized in that**, binding at least one physical port to at least one said VCI interface comprises any step of:
binding one said physical port to one said VCI interface;
binding N said physical ports to one said VCI interface; and
binding N said physical ports to N said VCI interfaces, and
wherein binding the at least one said VCI interface to one said FlexE Client includes any step of:
binding N said VCI interfaces to one said FlexE Client; and
binding one said VCI interface to one said FlexE Client,
wherein N is an integer greater than or equal to 1.

5. The method according to claim 3, **characterized in that**, enabling or disabling a physical port comprises at least one of:
when priorities of physical ports bound to one same FlexE Client are not equivalent with each other, enabling one of the physical ports, and disabling the other physical ports;
when the priorities of the physical ports bound to the same FlexE Client are all equivalent, enabling all the physical ports bound to the FlexE Client;
when the priorities of the physical ports bound to the same FlexE Client are not equivalent with each other and the priorities of the physical ports bound to the same FlexE Client are not set as a preset value, enabling one of the physical ports and disabling the other physical ports;
when the priorities of the physical ports bound to the same FlexE Client are all equivalent and the priorities of the physical ports bound to the same FlexE Client are not set as the preset value, enabling all the physical ports bound to the FlexE Client;
when the priorities of the physical ports bound to the same FlexE Client are partly equivalent while partly not, enabling at least one of the physical ports, and disabling the other physical ports; and
when the priorities of the physical ports bound to the same FlexE Client are partly equivalent while partly not and the priorities of the physical ports bound to the same FlexE Client are not set as the preset value, enabling at least one of the physical ports, and disabling the other physical ports.

6. An apparatus for transmitting a service, **characterized in that**, the apparatus comprises:
a transmission module (501), configured to switch, when a first physical port for transmitting the service fails, the service to a second physical port in which no service is transmitted, wherein the second physical port is a physical port that is bound to a first Flex Ethernet, FlexE, Client and other than the first physical port, and the first FlexE Client is a FlexE Client that the service corresponds to; or
the transmission module (501), configured to switch, when a first physical port for transmitting the service fails, the service to a third physical port in which no service is transmitted; wherein the third physical port is a physical port that is bound to a second FlexE Client differing from the first FlexE Client,
wherein switching, when a first physical port for transmitting the service fails, the service to a second physical port or a third physical port in which no service is transmitted for being transmitted comprises:
switching, when there is the second physical port in which no service is transmitted and the second physical port in which no service is transmitted is normal, the service to the second physical port in which no service is transmitted,
the method further comprises:
switching, when there is the second physical port in which no service is transmitted but the second physical port in which no service is transmitted is abnormal or when there is no the second physical port in which no service is transmitted, the service to the third physical port in which no service is transmitted, a priority of which is lower than that of the first physical port.

7. A device for transmitting a service, **characterized in that**, comprising a processor and a computer-readable storage medium, wherein the computer-readable storage medium stores instructions which, when are executed by the processor, causes the method for transmitting a service according to anyone of claims 1 to 5 to be implemented.

8. A computer-readable storage medium storing a computer program thereon, wherein the computer program, when is executed by a processor, causes steps of the method for transmitting services according to any one of claims 1 to 5 to be implemented.

## Patentansprüche

1. Verfahren zum Übertragen eines Service, **dadurch gekennzeichnet, dass** das Verfahren umfasst:
Schalten (300), wenn ein erster physikalischer Anschluss zum Übertragen des Service ausfällt, des Service zu einem zweiten physikalischen Anschluss, an dem kein Service übertragen wird, wobei der zweite physikalische Anschluss ein physikalischer Anschluss ist, der an einen ersten Flex-Ethernet- (FlexE-) Client und nicht an den ersten physikalischen Anschluss gebunden ist, und der erste FlexE-Client ein FlexE-Client ist, dem der Service entspricht; oder
Schalten (300), wenn ein erster physikalischer Anschluss zum Übertragen des Service ausfällt, des Service zu einem dritten physikalischen Anschluss, an dem kein Service übertragen wird, wobei der dritte physikalische Anschluss ein physikalischer Anschluss ist, der an einen zweiten FlexE-Client gebunden ist, der sich von dem ersten FlexE-Client unterscheidet,
wobei das Schalten, wenn ein erster physikalischer Anschluss zum Übertragen des Service ausfällt, des Service zu einem zweiten physikalischen Anschluss oder einem dritten physikalischen Anschluss, an dem kein Service übertragen wird, um übertragen zu werden, umfasst:
Schalten, wenn es den zweiten physikalischen Anschluss gibt, an dem kein Service übertragen wird, und der zweite physikalische Anschluss, an dem kein Service übertragen wird, normal ist, des Service zu dem zweiten physikalischen Anschluss, an dem kein Service übertragen wird,
wobei das Verfahren ferner umfasst:
Schalten, wenn es den zweiten physikalischen Anschluss gibt, an dem kein Service übertragen wird, aber der zweite physikalische Anschluss, an dem kein Service übertragen wird, anormal ist, oder wenn es den zweiten physikalischen Anschluss nicht gibt, an dem kein Service übertragen wird, des Service zu dem dritten physikalischen Anschluss, an dem kein Service übertragen wird, dessen Priorität niedriger als die des ersten physikalischen Anschlusses ist.

2. Verfahren nach Anspruch 1, **dadurch gekennzeichnet, dass** der zweite physikalische Anschluss eine Priorität aufweist, die sich von der des ersten physikalischen Anschlusses unterscheidet.

3. Verfahren nach einem der Ansprüche 1 bis 2, **dadurch gekennzeichnet, dass** das Verfahren vor dem Schalten, wenn ein erster physikalischer Anschluss zum Übertragen des Service ausfällt, des Service zu einem zweiten physikalischen Anschluss oder einem dritten physikalischen Anschluss, an dem kein Service übertragen wird, ferner umfasst:
Erzeugen einer virtuellen universellen öffentlichen Funk-Schnittstelle (VCI);
Binden mindestens eines physikalischen Anschlusses an mindestens eine VCI-Schnittstelle und Binden der mindestens einen VCI-Schnittstelle an einen FlexE-Client; und
Übertragen des Service an dem ersten physikalischen Anschluss, wobei der erste physikalische Anschluss in einem aktivierten Zustand ist.

4. Verfahren nach Anspruch 3, **dadurch gekennzeichnet, dass** das Binden mindestens eines physikalischen Anschlusses an mindestens eine VCI-Schnittstelle einen beliebigen der folgenden Schritte umfasst:
Binden eines physikalischen Anschlusses an eine VCI-Schnittstelle;
Binden von N physikalischen Anschlüssen an eine VCI-Schnittstelle; und
Binden von N physikalischen Anschlüssen an N VCI-Schnittstellen, und
wobei das Binden der mindestens einen VCI-Schnittstelle an einen FlexE-Client einen beliebigen der folgenden Schritte umfasst:
Binden von N VCI-Schnittstellen an einen FlexE-Client; und
Binden einer VCI-Schnittstelle an einen FlexE-Client,
wobei N eine ganze Zahl größer oder gleich 1 ist.

5. Verfahren nach Anspruch 3, **dadurch gekennzeichnet, dass** das Aktivieren oder Deaktivieren eines physikalischen Anschlusses mindestens einen der folgenden Schritte umfasst:
wenn Prioritäten von physikalischen Anschlüssen, die an einen gleichen FlexE-Client gebunden sind, nicht äquivalent zueinander sind, Aktivieren eines der physikalischen Anschlüsse und Deaktivieren der anderen physikalischen Anschlüsse;
wenn die Prioritäten der physikalischen Anschlüsse, die an den gleichen FlexE-Client gebunden sind, alle äquivalent sind, Aktivieren aller physikalischen Anschlüsse, die an den FlexE-Client gebunden sind;
wenn die Prioritäten der physikalischen Anschlüsse, die an den gleichen FlexE-Client gebunden sind, nicht äquivalent zueinander sind und die Prioritäten der physikalischen Anschlüsse, die an den gleichen FlexE-Client gebunden sind, nicht als ein voreingestellter Wert eingestellt sind, Aktivieren eines der physikalischen Anschlüsse und Deaktivieren der anderen physikalischen Anschlüsse;
wenn die Prioritäten der physikalischen Anschlüsse, die an den gleichen FlexE-Client gebunden sind, alle äquivalent sind und die Prioritäten der physikalischen Anschlüsse, die an den gleichen FlexE-Client gebunden sind, nicht als der voreingestellte Wert eingestellt sind, Aktivieren aller physikalischen Anschlüsse, die an den FlexE-Client gebunden sind;
wenn die Prioritäten der physikalischen Anschlüsse, die an den gleichen FlexE-Client gebunden sind, teilweise äquivalent sind, während sie teilweise nicht äquivalent sind, Aktivieren mindestens eines der physikalischen Anschlüsse und Deaktivieren der anderen physikalischen Anschlüsse; und
wenn die Prioritäten der physikalischen Anschlüsse, die an den gleichen FlexE-Client gebunden sind, teilweise äquivalent sind, während sie teilweise nicht äquivalent sind, und die Prioritäten der physikalischen Anschlüsse, die an den gleichen FlexE-Client gebunden sind, nicht als der voreingestellte Wert eingestellt sind, Aktivieren mindestens eines der physikalischen Anschlüsse und Deaktivieren der anderen physikalischen Anschlüsse.

6. Vorrichtung zum Übertragen eines Service, **dadurch gekennzeichnet, dass** die Vorrichtung umfasst:
ein Übertragungsmodul (501), das konfiguriert ist, um, wenn ein erster physikalischer Anschluss zum Übertragen des Service ausfällt, den Service zu einem zweiten physikalischen Anschluss zu schalten, an dem kein Service übertragen wird, wobei der zweite physikalische Anschluss ein physikalischer Anschluss ist, der an einen ersten Flex-Ethernet- (FlexE-) Client und nicht an den ersten physikalischen Anschluss gebunden ist, und der erste FlexE-Client ein FlexE-Client ist, dem der Service entspricht; oder
das Übertragungsmodul (501), das konfiguriert ist, um, wenn ein erster physikalischer Anschluss zum Übertragen des Service ausfällt, den Service zu einem dritten physikalischen Anschluss zu schalten, an dem kein Service übertragen wird; wobei der dritte physikalische Anschluss ein physikalischer Anschluss ist, der an einen zweiten FlexE-Client gebunden ist, der sich von dem ersten FlexE-Client unterscheidet,
wobei das Schalten, wenn ein erster physikalischer Anschluss zum Übertragen des Service ausfällt, des Service zu einem zweiten physikalischen Anschluss oder einem dritten physikalischen Anschluss, an dem kein Service übertragen wird, um übertragen zu werden, umfasst:
Schalten, wenn es den zweiten physikalischen Anschluss gibt, an dem kein Service übertragen wird, und der zweite physikalische Anschluss, an dem kein Service übertragen wird, normal ist, des Service zu dem zweiten physikalischen Anschluss, an dem kein Service übertragen wird,
wobei das Verfahren ferner umfasst:
Schalten, wenn es den zweiten physikalischen Anschluss gibt, an dem kein Service übertragen wird, aber der zweite physikalische Anschluss, an dem kein Service übertragen wird, anormal ist, oder wenn es den zweiten physikalischen Anschluss nicht gibt, an dem kein Service übertragen wird, des Service zu dem dritten physikalischen Anschluss, an dem kein Service übertragen wird, dessen Priorität niedriger als die des ersten physikalischen Anschlusses ist.

7. Vorrichtung zum Übertragen eines Service, **dadurch gekennzeichnet, dass** sie einen Prozessor und ein computerlesbares Speichermedium umfasst, wobei das computerlesbare Speichermedium Anweisungen speichert, die, wenn sie von dem Prozessor ausgeführt werden, das Implementieren des Verfahrens zum Übertragen eines Service nach einem der Ansprüche 1 bis 5 bewirken.

8. Computerlesbares Speichermedium, auf dem ein Computerprogramm gespeichert ist, wobei das Computerprogramm, wenn es von einem Prozessor ausgeführt wird, das Implementieren der Schritte des Verfahrens zum Übertragen von Service nach einem der Ansprüche 1 bis 5 bewirkt.

## Revendications

1. Procédé d'envoyer un service, **caractérisé en ce que** le procédé comprend les étapes consistant à :
commuter (300), lorsqu'un premier port physique pour envoyer le service est défaillant, le service vers un deuxième port physique dans lequel aucun service n'est envoyé, dans lequel le deuxième port physique est un port physique qui est lié à un premier client Flex Ethernet FlexE, et autre que le premier port physique, et le premier client FlexE est un client FlexE auquel le service correspond ; ou
commuter (300), lorsqu'un premier port physique pour envoyer le service est défaillant, le service vers un troisième port physique dans lequel aucun service n'est envoyé, dans lequel le troisième port physique est un port physique qui est lié à un second client FlexE différent du premier client FlexE,
dans lequel commuter, lorsqu'un premier port physique pour envoyer le service est défaillant, le service vers un deuxième port physique ou un troisième port physique dans lequel aucun service n'est envoyé pour être envoyé comprend les étapes consistant à :
commuter, lorsqu'il y a le deuxième port physique dans lequel aucun service n'est envoyé et que le deuxième port physique dans lequel aucun service n'est envoyé est normal, le service vers le deuxième port physique dans lequel aucun service n'est envoyé,
le procédé comprend en outre les étapes consistant à :
commuter, lorsqu'il y a le deuxième port physique dans lequel aucun service n'est envoyé mais que le deuxième port physique dans lequel aucun service n'est envoyé est anormal ou lorsqu'il n'y a pas le deuxième port physique dans lequel aucun service n'est envoyé, le service vers le troisième port physique dans lequel aucun service n'est envoyé, dont une priorité est inférieure à celle du premier port physique.

2. Procédé selon la revendication 1, **caractérisé en ce que** le deuxième port physique a une priorité différente de celle du premier port physique.

3. Procédé selon l'une quelconque des revendications 1 à 2, **caractérisé en ce que**, avant de commuter, lorsqu'un premier port physique pour envoyer le service est défaillant, le service vers un deuxième port physique ou un troisième port physique dans lequel aucun service n'est envoyé, le procédé comprend en outre les étapes consistant à :
créer une interface radio publique universelle virtuelle, VCI ;
lier au moins un port physique à au moins une dite interface VCI, et lier l'au moins une dite interface VCI à un dit client FlexE ; et
envoyer le service au niveau du premier port physique, dans lequel le premier port physique est dans un état activé.

4. Procédé selon la revendication 3, **caractérisé en ce que**, lier au moins un port physique à au moins une dite interface VCI comprend l'une quelconque des étapes consistant à :
lier un dit port physique à une dite interface VCI ;
lier N dits ports physiques à une dite interface VCI ; et
lier N dits ports physiques à N dites interfaces VCI, et
dans lequel lier l'au moins une dite interface VCI à un dit client FlexE comprend l'une quelconque des étapes consistant à :
lier N dites interfaces VCI à un dit client FlexE ; et
lier une dite interface VCI à un dit client FlexE,
dans lequel N est un entier supérieur ou égal à 1.

5. Procédé selon la revendication 3, **caractérisé en ce que**, activer ou désactiver un port physique comprend au moins l'une des étapes consistant à :
lorsque des priorités de ports physiques liés à un même client FlexE ne sont pas équivalentes les unes aux autres, activer l'un des ports physiques, et désactiver les autres ports physiques ;
lorsque les priorités des ports physiques liés au même client FlexE sont toutes équivalentes, activer tous les ports physiques liés au client FlexE ;
lorsque les priorités des ports physiques liés au même client FlexE ne sont pas équivalentes les unes aux autres et les priorités des ports physiques liés au même client FlexE ne sont pas définies comme une valeur prédéfinie, activer l'un des ports physiques et désactiver les autres ports physiques ;
lorsque les priorités des ports physiques liés au même client FlexE sont toutes équivalentes et les priorités des ports physiques liés au même client FlexE ne sont pas définies comme la valeur prédéfinie, activer tous les ports physiques liés au client FlexE ;
lorsque les priorités des ports physiques liés au même client FlexE sont partiellement équivalentes alors qu'elles ne le sont pas partiellement équivalentes, activer au moins l'un des ports physiques, et désactiver les autres ports physiques ; et
lorsque les priorités des ports physiques liés au même client FlexE sont partiellement équivalentes alors qu'elles ne le sont pas partiellement équivalentes et les priorités des ports physiques liés au même client FlexE ne sont pas définies comme la valeur prédéfinie, activer au moins l'un des ports physiques, et désactiver les autres ports physiques.

6. Appareil pour envoyer un service, **caractérisé en ce que** l'appareil comprend :
un module de transmission (501), configuré pour commuter, lorsqu'un premier port physique pour envoyer le service est défaillant, le service vers un deuxième port physique dans lequel aucun service n'est envoyé, dans lequel le deuxième port physique est un port physique qui est lié à un premier client Flex Ethernet FlexE, et autre que le premier port physique, et le premier client FlexE est un client FlexE auquel le service correspond ; ou
le module de transmission (501), configuré pour commuter, lorsqu'un premier port physique pour envoyer le service est défaillant, le service vers un troisième port physique dans lequel aucun service n'est envoyé ; dans lequel le troisième port physique est un port physique qui est lié à un second client FlexE différent du premier client FlexE,
dans lequel commuter, lorsqu'un premier port physique pour envoyer le service est défaillant, le service vers un deuxième port physique ou un troisième port physique dans lequel aucun service n'est envoyé pour être envoyé comprend les étapes consistant à :
commuter, lorsqu'il y a le deuxième port physique dans lequel aucun service n'est envoyé et que le deuxième port physique dans lequel aucun service n'est envoyé est normal, le service vers le deuxième port physique dans lequel aucun service n'est envoyé,
le procédé comprend en outre les étapes consistant à :
commuter, lorsqu'il y a le deuxième port physique dans lequel aucun service n'est envoyé mais que le deuxième port physique dans lequel aucun service n'est envoyé est anormal ou lorsqu'il n'y a pas le deuxième port physique dans lequel aucun service n'est envoyé, le service vers le troisième port physique dans lequel aucun service n'est envoyé, dont une priorité est inférieure à celle du premier port physique.

7. Dispositif pour envoyer un service, **caractérisé en ce qu'**il comprend un processeur et un moyen de stockage lisible par ordinateur, dans lequel le moyen de stockage lisible par ordinateur stocke des instructions qui, lorsqu'elles sont exécutées par le processeur, amènent le procédé pour envoyer un service selon l'une quelconque des revendications 1 à 5 à être mis en œuvre.

8. Moyen de stockage lisible par ordinateur sur lequel est stocké un programme informatique, dans lequel le programme informatique, lorsqu'il est exécuté par un processeur, amène les étapes du procédé pour envoyer des services selon l'une quelconque des revendications 1 à 5 à être mises en œuvre.
